# EUROPÄISCHE PATENTSCHRIFT

(11) **EP 0 551 584 B1**
(45) Veröffentlichungstag und Bekanntmachung des Hinweises auf die Patenterteilung: **15.03.1995**
(21) Anmeldenummer: 92119441.1
(22) Anmeldetag: 13.11.1992
(51) Int. Cl.: B29C 45/17

(54) **Formschliesseinrichtung für Spritzgiessmaschinen**
Mould clamping device for injection moulding machines
Dispositif de fermeture de moule pour presses à injection

(30) Priorität: 14.12.1991 DE 4141259
(43) Veröffentlichungstag der Anmeldung: 21.07.1993
(73) Patentinhaber: Hemscheidt Maschinentechnik Schwerin GmbH & Co., 19061 Schwerin (DE)
(72) Erfinder: Stein, Walter, O-2792 Schwerin (DE)

(56) Entgegenhaltungen:
- EP-A- 0 311 133
- WO-A-88/09256
- DE-A- 1 931 432
- PATENT ABSTRACTS OF JAPAN vol. 14, no. 567 (M-1059) 17. Dezember 1990 & JP-A-22 41 715 (TOYO MACG & METAL CO LTD)

## Beschreibung

Die Erfindung betrifft eine Formschließeinrichtung für Spritzgießmaschinen mit einer festen und einer beweglichen Werkzeugaufspannplatte, die auf einem Maschinengestell angeordnet sind. Die bewegliche Werkzeugaufspannplatte ist auf einem Gleitschlitten mit zwei Gleitschuhen und einem biegesteifen Verbindungsteil befestigt. Beide Werkzeugaufspannplatten nehmen die Formhälften des Formwerkzeuges auf und sind über freitragende oder durchgehende Säulen miteinander verbindbar oder verbunden. Für die Einstellung der Werkzeugeinbauhöhe ist eine Werkzeughöhenverstellvorrichtung vorhanden. Zum Zusammen- oder Auseinanderfahren der Formhälften des Formwerkzeuges wird die bewegliche Werkzeugaufspannplatte mit Hilfe von einem oder mehreren Eilgangzylindern in die Öffnungs- oder Schließstellung gefahren, während durch Schließzylinder die Schließ- und Zuhaltekraft und die Aufreißkraft aufgebracht wird.

Bei den bisher aus der Praxis bekannten gattungsgemäßen Spritzgießmaschinen sind die bewegliche Werkzeugaufspannplatte und der Gleitschlitten in der Maschinenlängsachse und in der Nähe der Plattenvorder- bzw. -hinterkante formschlüssig miteinander verbunden und mit Befestigungsschrauben, die ebenfalls in der Nähe der Maschinenlängsachse angeordnet sind, gegeneinander verspannt. Diese Verbindung ermöglicht nur an den Außenrändern rechts und links von der Werkzeugaufspannplatte eine geringfügige Verschiebung der Werkzeugaufspannplatte zum Gleitschlitten. Das ist dann der Fall, wenn sich die bewegliche Werkzeugaufspannplatte von oben betrachtet unter der Wirkung der Schließkräfte der Schließzylinder gegen den Reibungswiderstand gegenüber dem Gleitschlitten durchbiegt.

Das Ausrichten der beweglichen Werkzeugaufspannplatte zur festen Werkzeugaufspannplatte in der Höhe und Neigung erfolgt durch Beilegen von Paßblechen, deren Dicke durch Versuche ermittelt wird. Das seitliche Ausrichten der beweglichen Werkzeugaufspannplatte erfolgt mit Druckschrauben, die seitlich vom Maschinengestell auf den Gleitschlitten einwirken. An den vier Eckpunkten des Gleitschlittens werden kombinierte Rollen-Gleitführungen über separate Druckschrauben an entsprechenden Führungsflächen des Maschinengestells angestellt. Diese Seitenführung hat den Nachteil, daß sie sehr aufwendig und ungenau ist und der Einstellvorgang aufwendig und kompliziert ist.

Bei der Aufbringung der Schließkraft auf die beiden Formhälften des Formwerkzeuges durch die Schließzylinder treten an den Werkzeugaufspannplatten Verformungen auf, die unterschiedliche Ursachen haben können. Bedingt durch die Konfiguration des Formteils kommt es beim Öffnungsvorgang des Formwerkzeuges zu unsymmetrischen Aufreißkräften, die bei der festen Verbindung zwischen dem Gleitschlitten und der beweglichen Werkzeugaufspannplatte erhebliche Querkräfte auf den Gleitschlitten übertragen. Dadurch wird dessen Führung im Maschinengestell stark belastet, was einerseits Verschleiß und schädliches Spiel zur Folge hat, andererseits werden die Zentrierelemente der Werkzeughälften Übermäßig beansprucht.

Bedingt durch die technologische Fertigung sind die Werkzeugaufspannplatten, die Formwerkzeuge und die Führungen mit Toleranzen behaftet, die sich an der Teilfuge des Formwerkzeuges und den Führungen addieren. Bei vorhandener Unparallelität zwischen den Formhälften des Formwerkzeuges werden diese bis zur satten Anlage durch den großen Kraftüberschuß der Schließzylinder zusammengezogen. Es wirken sehr große Querkräfte auf die Führung des Gleitschlittens, wodurch dieser bis zu einem gewissen Grade verformt wird und sich gegenüber dem Maschinengestell schrägstellt. Dadurch kann die Seitenführung des Gleitschlittens so stark belastet werden, daß sich einerseits Verschleiß und schädliches Spiel zwischen Gleitschlitten und Maschinengestell einstellt und andererseits werden wiederum die Zentrierelemente der Werkzeughälften stark belastet und auf Verschleiß beansprucht. Beim nächstfolgenden Werkzeugschließvorgang treffen dann die beiden Werkzeughälften infolge des unzulässig großen Gleitschlittenspiels ungenau aufeinander, was zu einer weiteren Schädigung des Werkzeuges führt. Die Folge ist, daß die Formteilqualität beeinträchtigt wird und es zur Bildung der sogenannten Schwimmhäute am Formteil kommt. Bei vorhandenen Unparallelitäten gegenüber der vertikalen Ebene kann der Gleitschlitten ferner an seiner Vorder- oder Hinterkante aus dem Maschinengestell ausgehoben werden, bis die planparallele Anlage der Formhälften des Formwerkzeuges gewährleistet ist. Dadurch treten ebenfalls Querverschiebungen zwischen den Werkzeughälften mit schädigenden Wirkungen auf. In der schiefgezogenen Stellung des Gleitschlittens wird das Formwerkzeug wieder geöffnet und fährt in dieser Stellung bzw. in einer durch die entstandenen Spiele bedingten unpräzisen Stellung beim nächsten Spritzgießzyklus wieder zusammen. Dabei können Eingriffsstörungen an den Führungselementen des Formwerkzeuges und ein vorzeitiger Verschleiß auftreten. Ferner müssen durch die wirkenden Querkräfte zusätzliche Reibungswiderstände überwunden werden, die bei der Dimensionierung des Antriebes zu berücksichtigen sind.

In der DEPS 3 718 106 ist eine Lösung beschrieben, bei der der Gleitschlitten gegen Vertikalbelastungen mit Hilfe linearer Wälzlagerführungen am Maschinengestell aufgenommen ist. Zur Parallelführung wird der Gleitschlitten durch zwei synchron angetriebene Gewindespindeln bewegt. Diese Lösung ist sehr kostenaufwendig und löst nicht die Probleme, die mit dem planparallelen Anschmiegen der beiden Formhälften des Formwerkzeuges beim Schließvorgang im Zusammenhang stehen.

Aus der EP 0 311 133 ist ferner eine gattungsfremde säulenlose Formschließeinrichtung für kleine Schließkräfte bekannt, mit der alle in vertikaler Richtung auftretenden Kräfte Differenzen und Lageabweichungen an der beweglichen Werkzeugaufspannplatte ausgeglichen werden. Dazu ist die bewegliche Werkzeugaufspannplatte um eine horizontale Drehachse kippbar gelagert und über dieses Gelenk mit einem zentral angreifenden hydraulischen Schließzylinder verbunden. Das Gelenk besitzt einstellbare Anschläge, und die bewegliche Werkzeugaufspannplatte ist über eine Rolle auf dem Maschinengestell abgestützt, wodurch Winkelbewegungen des Gelenkes um die horizontale Drehachse ermöglicht werden. Unterhalb des Gelenkes ist eine Rückstellfeder angeordnet, die auf die Gelenkteile wirkt. Neben dem Mangel, daß diese Lösung nur für kleine Schließkräfte geeignet ist, kann die bewegliche Werkzeugaufspannplatte nur Lageabweichungen zwischen der festen und der beweglichen Werkzeugaufspannplatte in vertikaler Richtung ausgleichen. Kräftedifferenzen und Lageabweichungen in der horizontalen Ebene, zwischen der linken und rechten Maschinenseite, können damit nicht ausgeglichen werden.

Ziel der Erfindung ist es, die Funktionssicherheit und die Genauigkeit der Gleitschlittenführung für die bewegliche Werkzeugaufspannplatte zu erhöhen sowie den technischen Aufwand und die zu überwindenden Reibungswiderstände zu reduzieren. Ein weiteres Ziel der Erfindung ist die Erhöhung der Standzeit und der Funktionsgenauigkeit der Formwerkzeuge und damit die Verbesserung der Formteilqualität. Aufgabe der Erfindung ist es, für den gesamten Spritzgießprozeß eine präzise und funktionssichere Gleitschlittenführung zu schaffen und die auf dem Gleitschlitten befindliche bewegliche Werkzeugaufspannplatte gegenüber der festen Werkzeugaufspannplatte in allen Koordinaten unabhängig vom Gleitschlitten zur festen Werkzeugaufspannplatte einstellbar bzw. rückstellbar zu gestalten. Erfindungsgemäß wird die Aufgabe durch die Kombination der Merkmale des Anspruchs 1 gelöst. Dabei sind seitlich am Gleitschlitten Seitenführungsrollen angeordnet, die über drehbare Exzenterbolzen einstellbar und am Maschinengestell abstützbar sind. Mit dieser spielfreien Einstellung des Gleitschlittens zum Maschinengestell wird zunächst eine stabile und funktionssichere Lage des Gleitschlittens im Maschinengestell erreicht, die außerdem kostengünstig ist. Durch die Wälzführung wird das Auftreten von Stick-slip-Effekten am Gleitschlitten verhindert, und der Fahrwiderstand wird reduziert. Zwischen dem Gleitschlitten und der beweglichen Werkzeugaufspannplatte ist ein Luftspalt vorhanden, und beide sind über mindestens drei, vorzugsweise vier, Stützen, die als Biegedruckstäbe ausgebildet sind, miteinander verbunden. Ferner steht die bewegliche Werkzeugaufspannplatte mit dem Gleitschlitten über einen zur Maschinenachse quer verschiebbaren vertikalen Drehzapfen in Verbindung. Über Befestigungsschrauben, die im Bereich der Randzonen der Maschinenlängsachse angeordnet sind, sind beide gemeinsam befestigt. Durch die Kombination dieser Lösungsmerkmale besitzt die bewegliche Werkzeugaufspannplatte alle Freiheitsgrade, um sich satt an die an der festen Werkzeugaufspannplatte befindliche Formhälfte des Formwerkzeuges anzuschmiegen, ohne daß dabei Querverspannungen zwischen den Formhälften des Formwerkzeuges auftreten. Damit wird eine größtmögliche Schonung der teuren und komplizierten Formwerkzeuge in der kritischen Schließ- und Aufreißphase erreicht und eine hohe Formteilqualität gewährleistet. So begrenzen die Biegedruckstäbe beim asymmetrischen Aufreißvorgang das Schiefziehen der beweglichen Werkzeughälfte, womit keine schädigenden Querverlagerungen zwischen den Werkzeughälften und keine übermäßigen Verbiegungen an den Zentrierelementen entstehen können. Ein weiterer Vorteil ist, wie rechnerisch ermittelt wurde, daß beim Schließvorgang die Kräfte, die auf die Seitenführung des Gleitschlittens wirken, auf ca. 1/30 der maximalen Schließkräfte begrenzt werden, was sich positiv auf die Langlebigkeit der Seitenführung des Gleitschlittens auswirkt. Der entscheidende Vorteil der erfindungsgemäßen Lösung besteht darin, daß ohne jede Reibung, d. h. ohne Hysteresis bei jedem Werkzeugöffnungsvorgang eine Rückstellung der beweglichen Werkzeugaufspannplatte in ihre zuvor eingestellte optimale Lage erfolgt. Dadurch liegen für den nächsten Werkzeugschließvorgang wieder die gleichen optimalen Ausgangsbedingungen vor. Erreicht wird das durch den vorhandenen Luftspalt zwischen dem Gleitschlitten und der beweglichen Werkzeugaufspannplatte und die Elastizität der Biegedruckstäbe.

In der weiteren Ausgestaltung der Erfindung besitzen die Stützen einen unteren und oberen Einspannschaft, der in Aufnahmebohrungen des Gleitschlittens und in der beweglichen Werkzeugaufspannplatte aufgenommen wird. Zwischen beiden Einspannschäften sind die Stützen verjüngt ausgebildet und an der unteren Stirnseite der Stützen ist eine Keilschräge angearbeitet, die mit einem keilförmigen Verstellelement in Wirkverbindung steht. Die Verstellelemente von jeweils zwei Stützen sind über eine Verstellspindel verbunden. Durch eine Drehbewegung der Verstellspindel ist die bewegliche Werkzeugaufspannplatte zum Gleitschlitten und zur festen Werkzeugaufspannplatte einstellbar. Bei kleineren Spritzgießmaschinen mit drei Stützen als Biegedruckstäbe kann die Höhen- bzw.

Neigungseinstellung der beweglichen Werkzeugaufspannplatte auch durch einfache unter den Stützen befindliche Druckschrauben erfolgen. Für weniger hohe Genauigkeitsansprüche kann die Verstelleinrichtung zur Einstellung der Stützen auch entfallen, die unteren Stirnflächen der Stützen besitzen dann keine Keilschräge. Von Vorteil ist ferner, daß durch die Mittenzentrierung der Verstellspindel über äußere Anschläge keine zusätzliche mechanische Bearbeitung am Gleitschlitten notwendig ist. Zur Gewährleistung der Beweglichkeit der beweglichen Werkzeugaufspannplatte gegenüber dem Gleitschlitten sind die Aufnahmebohrungen im verjüngten Bereich der Stütze stufenförmig erweitert. Des weiteren ist es vorteilhaft, wenn bei größeren Spritzgießmaschinen je zwei Seitenführungsrollen in einer Pendeltraverse ange- ordnet sind, die von Exzenterbolzen aufgenommen werden, der jeweils an den Eckpunkten des Gleitschlittens angeordnet ist.

Nachstehend wird die Erfindung in einem Ausführungsbeispiel näher erläutert. In den zugehörigen Zeichnungen ist dargestellt:
- Fig. 1: Formschließeinrichtung einer Spritzgießmaschine in Schließstellung in der Seitenansicht mit senkrechter Parallelitätsabweichung am Formwerkzeug
- Fig. 2: Formschließeinrichtung einer Spritzgießmaschine in Schließstellung in der Draufsicht mit waagerechter Parallelitätsabweichung am Formwerkzeug
- Fig. 3: schematisches Grundprinzip zur Bestimmung der erforderlichen Freiheitsgrade der beweglichen Werkzeugaufspannplatte
- Fig. 4: bewegliche Werkzeugaufspannplatte mit Gleitschlitten in der Seitenansicht
- Fig. 5: Horizontalschnitt nach der Linie I-I gemäß Fig. 4 durch die Ebene des Luftspaltes zwischen Gleitschlitten und beweglicher Werkzeugaufspannplatte
- Fig. 6: Eine andere Ausführungsform zur Figur 5
- Fig. 7: Vertikalschnitt nach der Linie II-II gemäß Figur 5 durch die Verstelleinrichtung für die Stützen
- Fig. 8: Vertikalschnitt nach der Linie III-III gemäß Figur 5 durch den Gleitschuh mit der Seitenführung für den Gleitschlitten
- Fig. 9: Vertikalschnitt nach der Linie IV-IV gemäß Figur 5 durch den Exzenterbolzen zur Einstellung der Seitenführung des Gleitschlittens
- Fig. 10: Horizontalschnitt nach der Linie V-V gemäß Figur 4 durch die Seitenführung für den Gleitschlitten
- Fig. 11: Vertikalschnitt nach der Linie VI-VI gemäß Figur 5 mit der Anordnung der Befestigungselemente
- Fig. 12: Horizontalschnitt nach der Linie VII-VII gemäß Figur 7

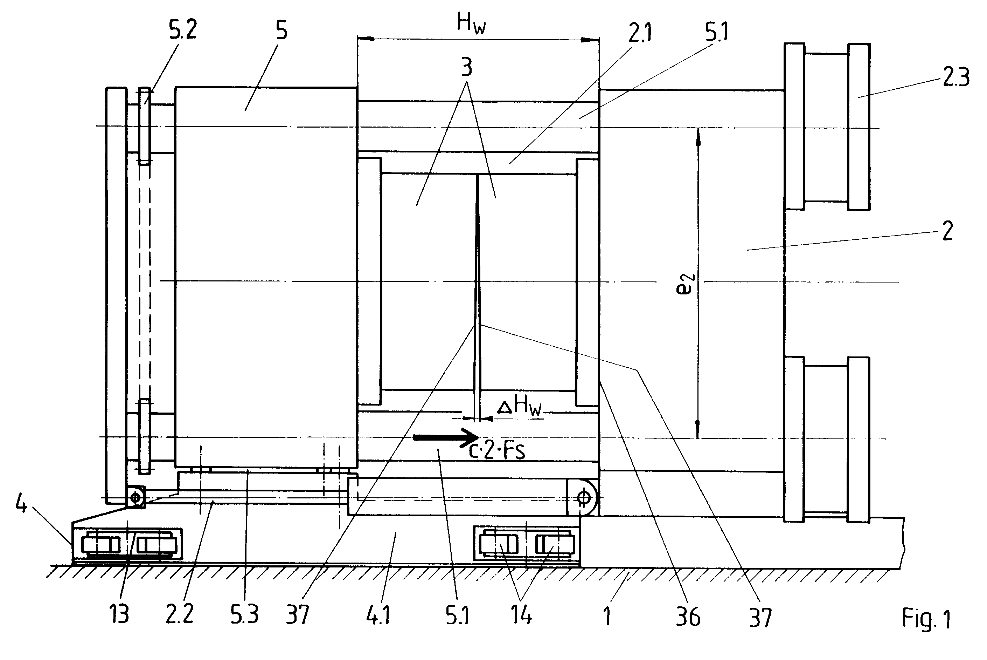

In Figur 1 ist die Formschließeinrichtung für eine Spritzgießmaschine in Schließstellung des Formwerkzeuges 3 in der Seitenansicht dargestellt. Die Formschließeinrichtung besteht aus einer festen Werkzeugaufspannplatte 2 und einer beweglichen Werkzeugaufspannplatte 5, auf denen die Formhälften des Formwerkzeuges 3 befestigt sind. Die Werkzeugaufspannplatten 2 und 5 sind über durchgehende oder freitragende Säulen 5.1 miteinander verbunden bzw. verbindbar, die zur Einstellung der Werkzeugeinbauhöhe H_{W} mit Hilfe einer Werkzeughöhenverstellvorrichtung 5.2 einstellbar sind. Mit Hilfe von Eilgangzylindern 2.2 wird der Werkzeugraum 2.1 weit geöffnet bzw. geschlossen und durch Schließzylinder 2.3 die Schließ- bzw. Aufreißkraft für das Formwerkzeug 3 aufgebracht. Die feste Werkzeugaufspannplatte 2 und die bewegliche Werkzeugaufspannplatte 5 mit dem Gleitschlitten 4 stützen sich auf einem Maschinengestell 1 ab.

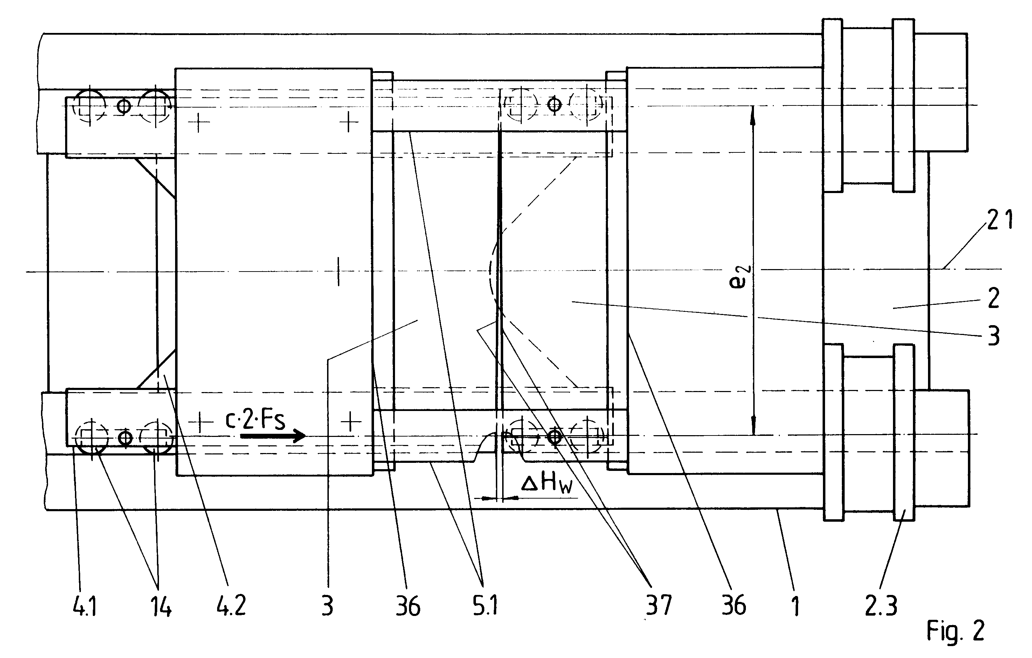

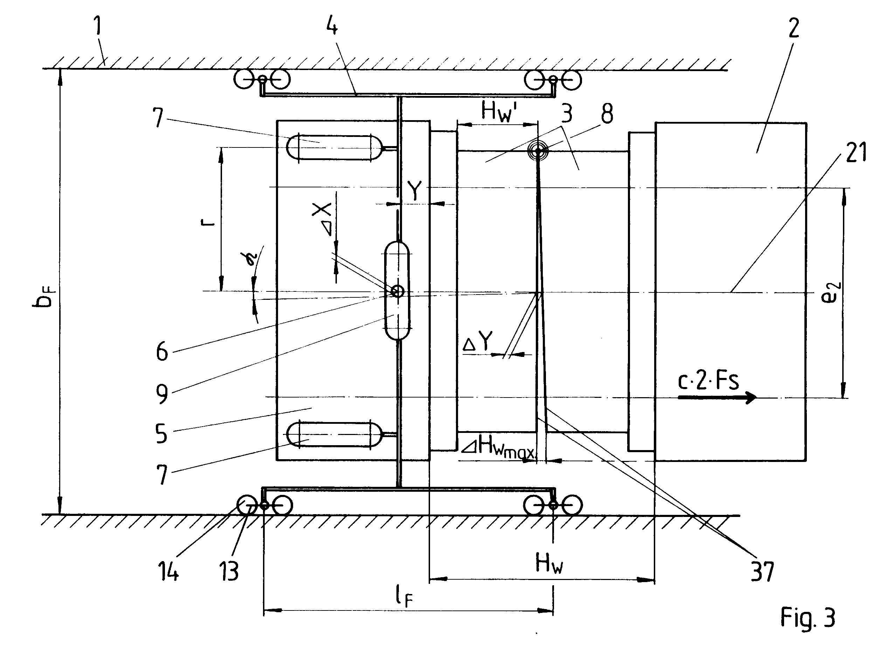

Der Gleitschlitten 4 besteht aus zwei Gleitschuhen 4.1, die über ein biegesteifes Verbindungsteil 4.2 miteinander verbunden sind, was aus Fig. 2, Fig. 5 und Fig. 6 ersichtlich ist. Seitlich vom Gleitschlitten 4 befinden sich außen am äußeren Ende jedes Gleitschuhes 4.1 in Abhängigkeit von der Maschinengröße einzelne oder in Pendeltraversen 13 angeordnete doppelte Seitenführungsrollen 14, die an anderer Stelle näher beschrieben sind. Aus der Figur 1 ist weiter ersichtlich, daß zwischen den beiden Formhälften des Formwerkzeuges 3 in der vertikalen Teilebene 37 keine Planparallelität besteht und an der unteren Formwerkzeugkante des Formwerkzeuges 3 eine Abweichung Δ H_{W} von der Werkzeugeinbauhöhe H_{W} verhanden ist. Die Säulen 5.1 sind im Abstand e₂ zueinander angeordnet und auf die unte- ren Säulen 5.1 wirkt eine Kraft c . 2 . F_{S}, die zur Figur 3 näher erläutert wird.

Die Figur 2 zeigt eine analoge Formschließeinrichtung für eine Spritzgießmaschine in Schließstellung des Formwerkzeuges 3, bei der im Unterschied zu Figur 1, eine Draufsicht erkennbar ist und zwischen den Formhälften des Formwerkzeuges 3 in der horizontalen Teilebene 37 keine Planparallelität besteht. Die an einer Seitenkante des Formwerkzeuges vorhandene Abweichung Δ H_{W} von der Werkzeugeinbauhöhe H_{W} ist sichtbar dargestellt und ebenso die auf die obere und untere Säule 5.1 wirkende Kraft c . 2 . F_{S}.

In Figur 3 erfolgte schematisch die Darstellung einer Formschließeinrichtung in der Draufsicht mit waagerechter Parallelitätsabweichung in der Teilebene 37 der Formhälften des Formwerkzeuges 3 zueinander. Wenn diese vorhandene Parallelitätsabweichung Δ H_{Wmax} beim Schließvorgang überwunden werden soll, muß eine Drehung der beweglichen Werkzeugaufspannplatte 5 gegenüber dem Gleitschlitten 4 möglich sein, an der dieser unbeteiligt bleiben soll.

Erreicht wird das durch eine Drehung der beweglichen Werkzeugaufspannplatte 5 um den dargestellten konstruktiven Drehpunkt 6, unter der Wirkung der anteiligen Kraft von zwei Schließzylindern 2.3, entsprechend der Beziehung c . 2 .F_{S} am Hebelarm des Säulenmittenabstandes e₂. Während dieser Drehbewegung der beweglichen Werkzeugaufspannplatte 5 stützt sich der Gleitschlitten 4 mit seinen Seitenführungsrollen 14 am Hebelarm der Führungslänge L_{F} gegenüber dem Maschinengestell 1 an dessen Führungsbreite b_{F} ab. Da die bewegliche Werkzeugaufspannplatte beim Werkzeugöffnungsvorgang selbsttätig in die zuvor eingestellte Lage zurückgestellt werden soll, muß die Drehung gegen den Widerstand von zwei in Längsrichtung angeordneten Federn 7 am Hebelarm r von der Maschinenlängsachse 21 aus erfolgen. Mit jeder Drehung der beweglichen Werkzeugaufspannplatte 5 um den Drehwinkel α sind Querverlagerungen Δ X in der Teilebene 37 am Formwerkzeug 3 verbunden, die von der Lage Y des konstruktiven Drehpunktes 6 zur beweglichen Werkzeugaufspannfläche und der Länge einer Hälfte H_{W}' des Formwerkzeuges 3 abhängen. Um diese Querverlagerungen zu vermeiden, muß die Drehung der beweglichen Werkzeugaufspannplatte 5 um den theoretischen Drehpunkt 8 erfolgen. Dazu ist es notwendig, daß der konstruktive Drehpunkt 6 einen federelastischen Querfreiheitsgrad erhält, der z. B. durch eine Querfeder 9 realisierbar ist. Während des Zusammenziehens des Spaltes Δ H_{Wmax} legt der Gleitschlitten 4 den Wegbetrag Δ Y zurück, d. h. um diesen Betrag fährt der Gleitschlitten 4 auf die feste Werkzeugaufspannplatte 2 zu. Die Federsteife der Federn 7 und 9 in Figur 3 wird dabei durch den Anteiligkeitsfaktor c in der Beziehung c . 2 . F_{S} ausgedrückt.

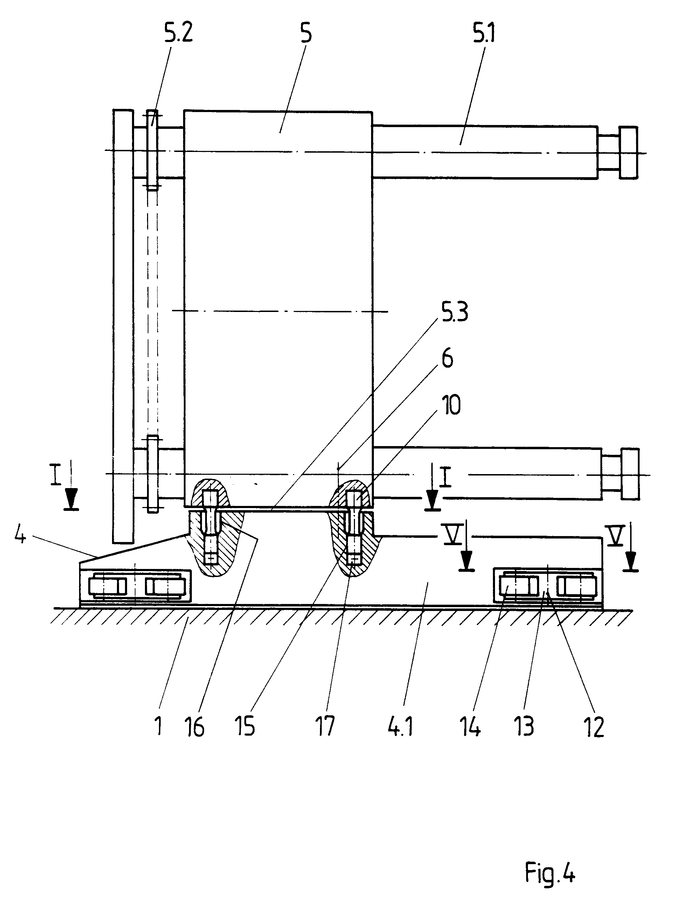

Die Figuren 4, 5 und 6 zeigen, wie das zuvor dargestellte kinematische Grundprinzip zwischen dem Gleitschlitten 4 und der beweglichen Werkzeugaufspannplatte 5 in eine Lösung umgesetzt werden kann, bei dem die Rückstellung der beweglichen Werkzeugaufspannplatte 5 ohne Hysteresis erfolgt. Dazu ist es erforderlich, daß die Bewegung der beweglichen Werkzeugaufspannplatte 5 gegenüber dem Gleitschlitten 4 ohne Überwindung von Reibungskräften möglich ist. Erreicht wird das, wenn die bewegliche Werkzeugaufspannplatte 5 auf vier bzw. drei sehr weit außen angeordneten Stützen 10, die als Biegedruckstäbe ausgebildet sind, gestellt wird, wobei zwischen dem Gleitschlitten 4 und der beweglichen Werkzeugaufspannplatte 5 ein Luftspalt 5.3 vorhanden sein muß. Der konstruktive Drehpunkt 6 wurde dabei als in einer Nut 11.1 quer verschiebbare Kulisse 11 gestaltet. Alle Rückstellungen der beweglichen Werkzeugaufspannplatte 5 in ihre Ausgangslage in X- und in Y-Richtung erfolgen über die Stützen 10, die als Biegedruckstäbe ausgebildet sind und die in ihnen gespeicherte Rückverformungsenergie.

Mit dem konstruktiven Drehpunkt 6 wird der genaue geometrische Ort der beweglichen Werkzeugaufspannplatte 5 zum Gleitschlitten 4 in der Maschinenlängsachse 21 bestimmt, der der Nachvornneigung der beweglichen Werkzeugaufspannplatte 5 durch angebaute schwere Formwerkzeuge 3 entgegenwirkt, die hier nicht dargestellt sind.

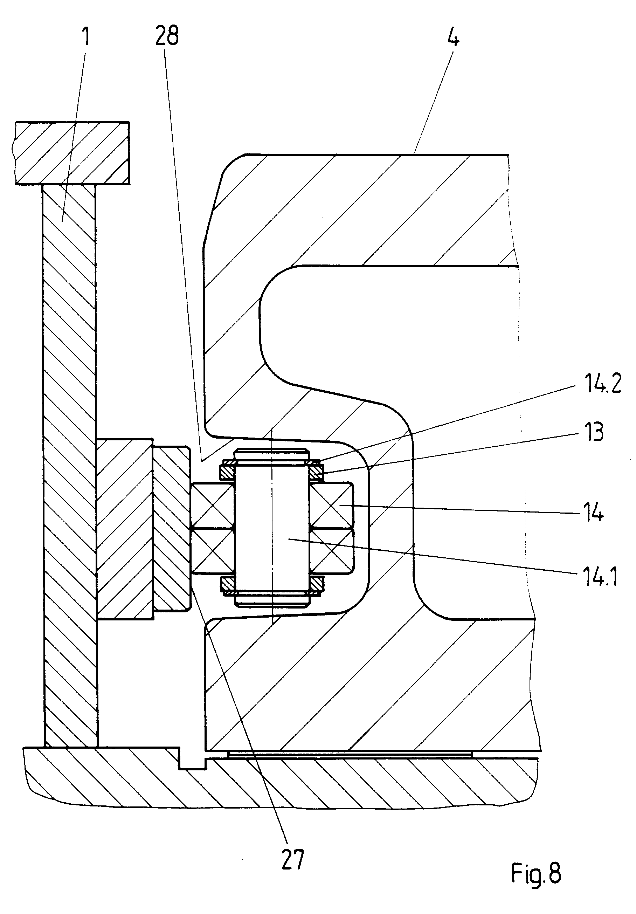

Die Figur 4 zeigt in einer Seitenansicht die bewegliche Werkzeugaufspannplatte 5 mit dem Gleitschlitten 4. In der beweglichen Werkzeugaufspannplatte 5 befinden sich freitragend gelagerte Säulen 5.1, die mit Hilfe der Werkzeughöhenverstellvorrichtung 5.2 auf die jeweilige Werkzeugeinbauhöhe H_{W} einstellbar sind. Am Gleitschuh 4.1 des Gleitschlittens 4 befinden sich an den äußeren Enden die Pendeltraversen 13, die über Exzenterbolzen 12 einstellbar sind. In den Pendeltraversen 13 sind jeweils zwei wälzlagergeführte Seitenführungsrollen 14 gelagert. Die näheren Einzelheiten dazu sind aus den Figuren 8, 9 und 10 ersichtlich und werden, soweit erforderlich, später erläutert.

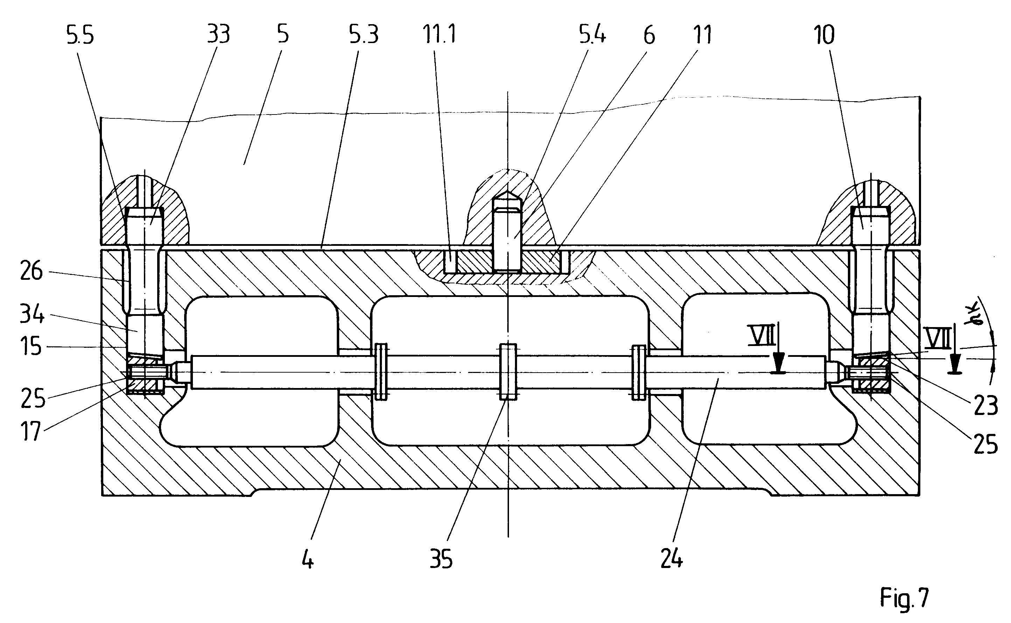

Zwischen der beweglichen Werkzeugaufspannplatte 5 und dem Gleitschlitten 4 sind die als Biegedruckstäbe ausgebildeten Stützen 10 in Teilschnittansichten erkennbar, auf denen die bewegliche Werkzeugaufspannplatte 5 so abgestützt wird, daß dazwischen ein Luftspalt 5.3 vorhanden ist. Die nähere Beschreibung der Stützen 10 und deren Anordnung erfolgt bei der Erläuterung der Figur 7.

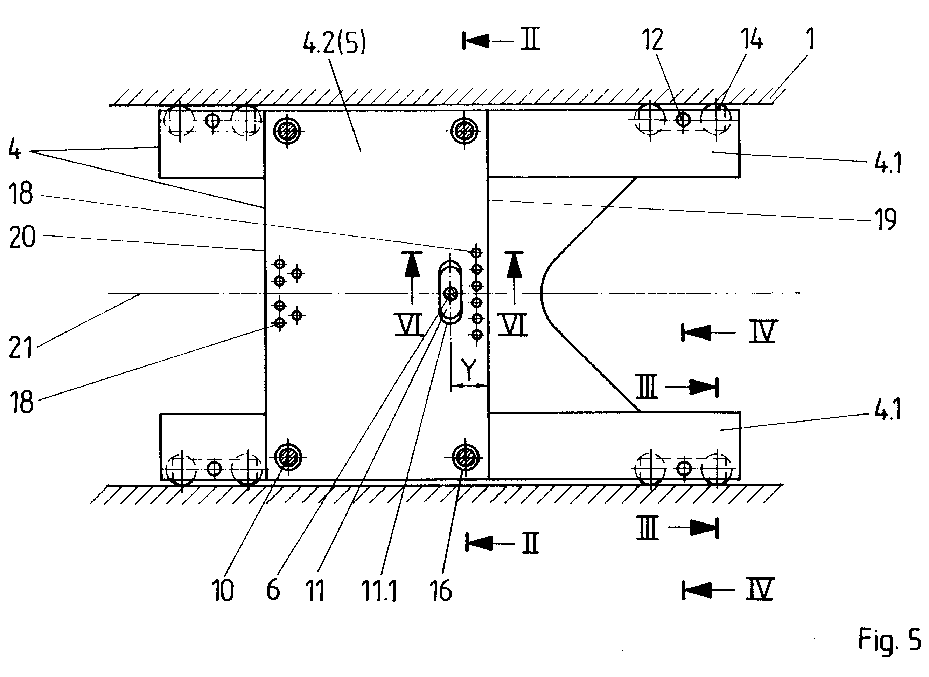

Aus der Figur 5 ist der Gleitschlitten 4, bestehend aus den Gleitschuhen 4.1 und dem Verbindungsteil 4.2 in der Draufsicht in der Ebene des Luftspaltes 5.3 nach der Schnittlinie I-I von Figur 4 erkennbar. Diese Figur dient insbesondere zur Veranschaulichung der Lage und Anordnung der Verbindungselemente zwischen der beweglichen Werkzeugaufspannplatte 5 und dem Gleitschlitten 4. Die vier Stützen 10 für die bewegliche Werkzeugaufspannplatte 5, die durch die Schnittdarstellung nicht erkennbar ist, sind weit außen in der Nähe der Eckpunkte der beweglichen Werkzeugaufspannplatte angeordnet. In der weiteren Beschreibung muß jedoch Bezug auf die bewegliche Werkzeugaufspannplatte genommen werden. Dabei wird angenommen, daß das Verbindungsteil 4.2 vom Gleitschlitten 4 in der Grundfläche deckungsgleich mit der Grundfläche der beweglichen Werkzeugaufspannplatte 5 ist. Dagegen befinden sich die Befestigungsschrauben 18 nahe der Vorderkante 19 bzw. der Hinterkante 20 der beweglichen Werkzeugaufspannplatte 5 und dicht an der Maschinenlängsachse 21. Des weiteren befindet sich der als querverschiebbare Kulisse 11 ausgebildete konstruktive Drehpunkt 6, in einem möglichst geringen Abstand Y zur Vorderkante 19 der beweglichen Werkzeugaufspannplatte 5. Erkennbar ist, daß die Kulisse 11 in einer Nut 11.1 verschiebbar ist. Aus der Gesamtanordnung ist außerdem die Lage der an den Gleitschuhen 4.1 des Gleitschlittens 4 befestigten Exzenterbolzen 12 mit den in Pendeltraversen 13 geführten Seitenführungsrollen 14, die am Maschinengestelll anliegen, ersichtlich.

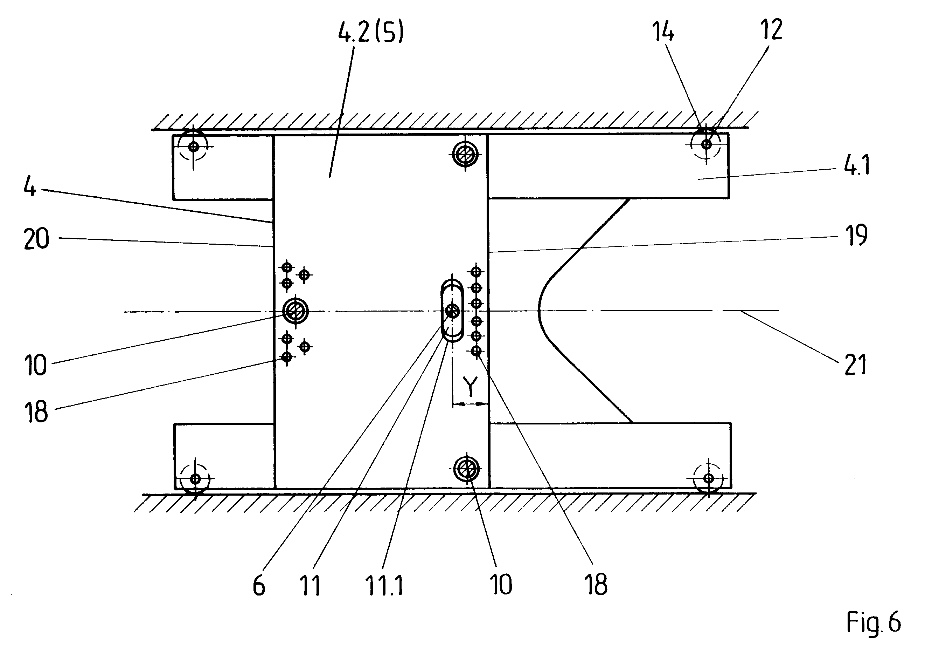

Die Figur 6 zeigt, abweichend von Figur 5, daß die bewegliche Werkzeugaufspannplatte 5, die wiederum nicht erkennbar ist, auf dem Gleitschlitten 4 nicht auf vier sondern nur auf drei Stützen 10 ruht. Bei dieser Anordnung befinden sich zwei Stützen 10 in der Nähe der Vorderkante 19 und eine Stütze 10 an der Hinterkante 20 der beweglichen Werkzeugaufspannplatte 5. Diese Anordnung ist notwendig, da einerseits die Stützkräfte an der Vorderseite der beweglichen Werkzeugaufspannplatte, infolge des Eigengewichtes von Werkzeugaufspannplatte und Formhälfte des Formwerkzeuges viel größer sind als an der hinteren Kante.

Andererseits muß die hintere Stütze 10 wesentlich biegeelastischer sein als die vorderen Stützen 10. Ferner ist aus Figur 6 erkennbar, daß die Seitenführungsrollen 14 nicht in Pendeltraversen, sondern direkt auf dem Exzenterbolzen 12 angeordnet sind. Diese in Figur 6 dargestellte Ausführungsform mit drei Stützen 10 und der Anordnung der Seitenführungsrollen 14 direkt auf dem Exzenterbolzen 12 erscheint für kleinere Formschließeinrichtungen von Spritzgießmaschinen, bei denen geringere Schließ- und Aufreißkräfte wirken, besonders geeignet.

Die Figur 7 zeigt eine Schnittdarstellung durch den gesamten Gleitschlitten 4 mit einem Teil der darauf befindlichen beweglichen Werkzeugaufspannplatte 5. Erkennbar sind zwei der vier bzw. drei Stützen 10, auf denen die bewegliche Werkzeugaufspannplatte 5 ruht, die mit Hilfe einer Höhenverstelleinrichtung einstellbar ist. Die Stützen 10 sind an ihrer unteren Stirnseite 23 unter einem selbsthemmenden Winkel α_{K} abgeschrägt. Jede abgeschrägte Stirnfläche 23 steht in Wirkverbindung mit einem darunter befindlichen keilförmigen Verstellelement 17. Über eine Verstellspindel 24 werden zwei Verstellelemente 17 gleichzeitig aufeinander zu- bzw. voneinander fortbewegt und dabei die Stützen 10 mit der beweglichen Werkzeugaufspannplatte 5 abgesenkt bzw. angehoben. Durch äußere Anschläge 25, in den Aufnahmebohrungen 15 für die Stützen 10, ist die Verstellspindel 24 mittenzentriert. Des weiteren ist die Verstellspindel 24 in vorzugsweise drei Segmente unterteilt, die lösbar miteinander verbunden sind. Dadurch ist eine zusätzliche mechanische Bearbeitung des Gleitschlittens 4 nicht erforderlich und eine einfache Montage der Verstellspindel 24, die über ein Konturstück 35 betätigt wird, möglich. Ferner ist erkennbar, daß in dem Bereich der Biegelänge 26 der Stütze 10, die Bohrung 15 einen größeren Durchmesser 16 hat. Der Luftspalt 5.3 zwischen der beweglichen Werkzeugaufspannplatte 5 und dem Gleitschlitten 4 wird durch die Länge der Stütze 10 und die Bohrungstiefe in den beiden Teilen bestimmt. In der Mitte der Figur 7 wurde in einem gesonderten Teilschnitt der konstruktive Drehpunkt 6, als in einer Nut 11.1 querverschiebbare Kulisse 11, sichtbar gemacht. Der konstruktive Drehpunkt 6 ist als Bolzen ausgebildet, der in einer Bohrung 5.4 der beweglichen Werkzeugaufspannplatte 5 aufgenommen wird.

Aus Figur 8 ist das Zusammenwirken der Seitenführungsrollen 14 vom Gleitschlitten 4 mit der entsprechenden Führungsfläche 27 am Maschinengestell 1 gemäß der Schnittlinie III-III aus Figur 5 erkennbar. Die Pendeltraversen 13 mit den Seitenführungsrollen 14 sind in einer entsprechend geformten Gußkontur 28 des Gleitschlittens 4 untergebracht. Die Seitenführungsrollen 14 sind vorzugsweise als Wälzlager ausgebildet, die von in der Pendeltraverse 13 angeordneten Bolzen 14.1, die durch Sicherungselemente 14.2 gesichert sind, aufgenommen werden.

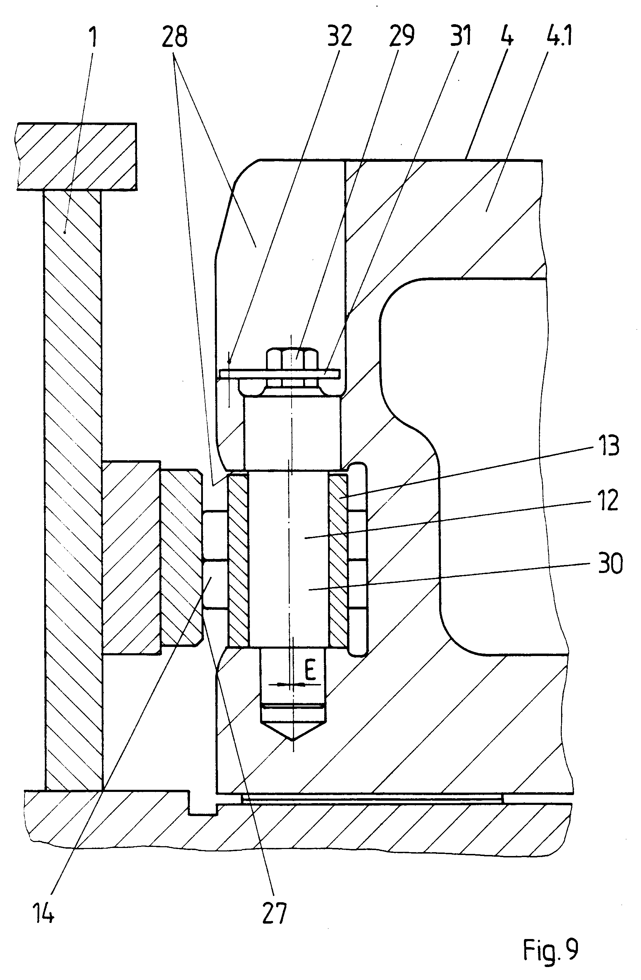

Die Figur 9 zeigt eine Schnittdarstellung durch den Exzenterbolzen 12, gemäß der Schnittlinie IV-IV aus Figur 5, der in der Gußkontur 28 im Gleitschuh 4.1 des Gleitschlittens 4 aufgenommen wird. Durch eine Drehbewegung am Formschlußende 29 des Exzenterbolzens 12 kann die Exzentrizität E des Abschnittes 30 auf dem die Pendeltraverse 13 oder die Seitenführungsrolle 14 direkt angeordnet sind, eingestellt werden, womit sich der Abstand der Seitenführungsrollen 14 zur Maschinenlängsachse 21, die hier nicht dargestellt ist, verändert. Die Anlage der Seitenführungsrollen 14 an der Führungsfläche 27 des Maschinengestells 1 ist somit einfach zu verwirklichen. Zur Sicherung der eingestellten Lage des Exzenterbolzens 12 dient ein Sicherungsblech 31 mit Sicherungsschraube 32.

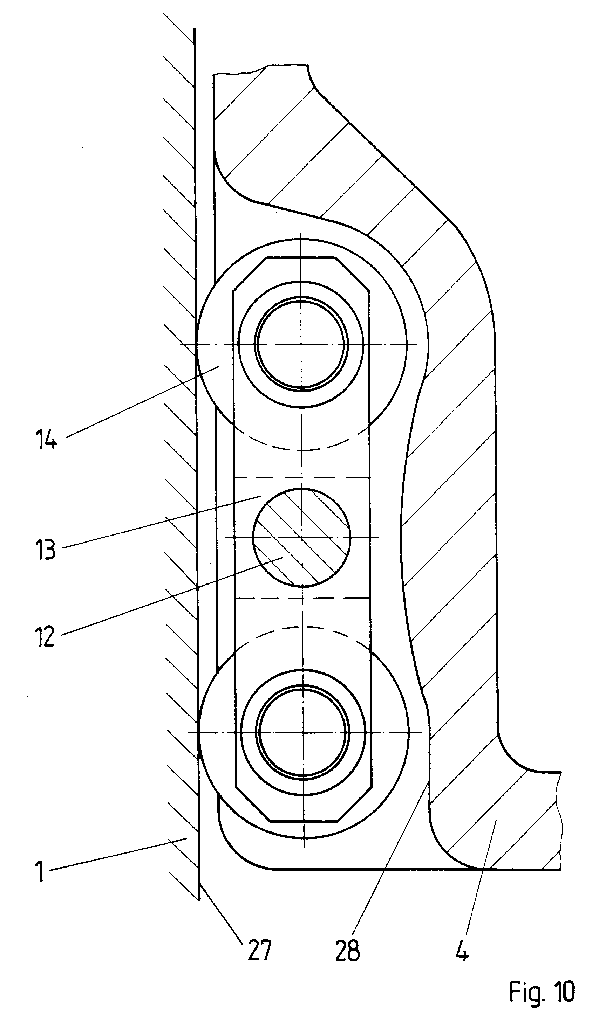

In Figur 10 ist ein Horizontalschnitt gemäß Figur 4 nach der Schnittlinie V-V erkennbar. Die Seitenführungsrollen 14 liegen satt an der Führungsfläche 27 des Maschinengestells 1 an und über die Pendeltraverse 13 findet ein Lastausgleich statt.

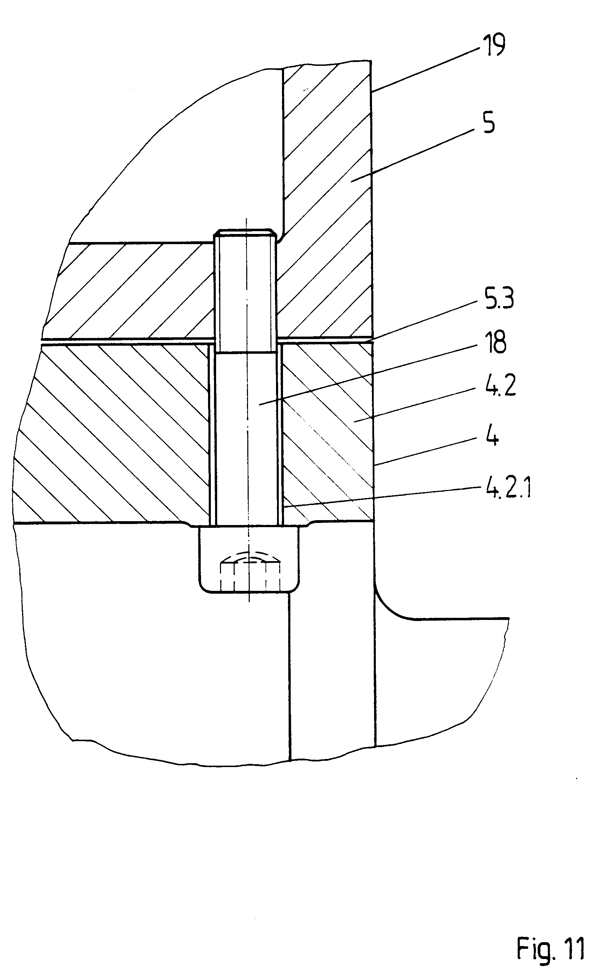

Die Figur 11 zeigt einen Schnitt nach der Linie VI-VI in Figur 5 durch die Randzone zwischen der beweglichen Werkzeugaufspannplatte 5 und dem Verbindungsteil 4.2 für die Gleitschuhe 4.1 vom Gleitschlitten 4. Erkennbar dargestellt ist eine Befestigungsschraube 18, die den Gleitschlitten 4 und die bewegliche Werkzeugaufspannplatte 5, zwischen denen der Luftspalt 5.3 sichtbar ist, miteinander verbindet. Zwischen der Befestigungsschraube 18 und der Aufnahmebohrung 4.2.1 im Verbindungsteil 4.2 ist ein ausreichendes Spiel vorhanden, um Lageveränderungen der beweglichen Werkzeugaufspannplatte 5 gegenüber dem Gleitschlitten 4 auszugleichen. Die Befestigungsschrauben 18 wurden, um diese Lageveränderungen klein zu halten, in der Nähe der Maschinenlängsachse 21 und der Vorder- und Hinterkante 19; 20 der beweglichen Werkzeugaufspannplatte 5 angeordnet, wie auch aus Figur 5 und 6 erkennbar ist.

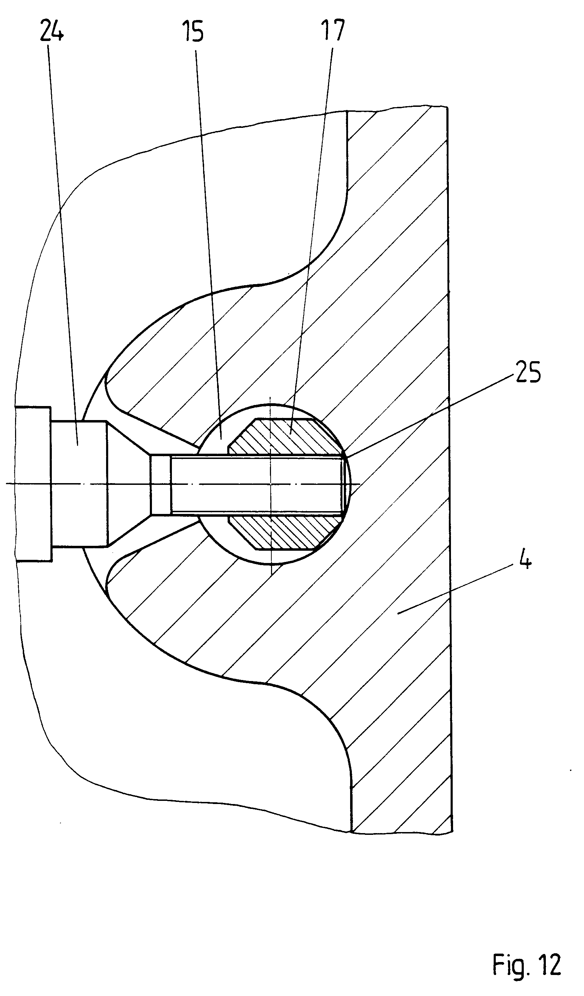

In Figur 12 ist veranschaulicht, daß die Verstellspindel 24 an der äußeren Wandung der Aufnahmebohrung 15 ihren Anschlag 25 hat und damit zentriert ist. Es geht ferner aus dieser Darstellung der Querverstellweg des keilförmigen Verstellelementes 17 in der Aufnahmebohrung 15 hervor.

Nachstehend wird die Wirkungsweise der erfindungsgemäßen Lösung kurz erläutert. Bei der Endmontage der Formschließeinrichtung wird mittels einer Einstellvorrichtung, die aus einem simulierten Formwerkzeug besteht, der Gleitschlitten 4 mit der beweglichen Werkzeugaufspannplatte 5 bezüglich der Symmetrie in der Maschinenlängsachse 21 und der Parallelität zwischen der festen und der beweglichen Werkzeugaufspannplatte 2 und 5 eingestellt. Die Einstellung erfolgt mit Hilfe der Exzenterbolzen 12 so, daß der Gleitschlitten 4 spielfrei im Maschinengestell 1 bewegbar ist. In dieser Stellung werden die Exzenterbolzen 12 mittels Sicherungsblech 31 und Sicherungsschraube 32 gesichert (Figur 9). Danach wird mit Hilfe eines Hebelschlüssels, der am Konturstück 35 der Verstellspindel 24 angreift, die Höhe sowie die Parallelität der beweglichen Werkzeugaufspannplatte 5 zur festen Werkzeugaufspannplatte 2 in Vertikalrichtung eingestellt (Fig. 7). Durch die Drehung der beiden Verstellspindeln 24 kann die bewegliche Werkzeugaufspannplatte 5 angehoben bzw. abgesenkt werden, in Abhängigkeit von deren Drehrichtung. Wird nur die vordere Verstellspindel 24 in Richtung "anheben" gedreht, so neigt sich die bewegliche Werkzeugaufspannplatte nach hinten. Erfolgt nur bei der hinteren Verstellspindel 24 eine Drehung in Richtung "anheben", so neigt sich die bewegliche Werkzeugaufspannplatte 5 nach vorne. Eine Sicherung der eingestellten beweglichen Werkzeugaufspannplatte 5 ist nicht erforderlich, da eine doppelte Selbsthemmung vorhanden ist, einerseits durch den Keilwinkel α_{K} an den Stützen 10 und den Verstellelementen 17 und andererseits durch die Gewindesteigung der Verstellspindeln 24. Nach so erfolgter Einstellung werden die Befestigungsschrauben 18 fest angezogen und die Formschließeinrichtung ist für den Spritzgießbetrieb bereit. In der Praxis der Herstellung von Formwerkzeugen ist es so, daß beide Formhälften zur Basis der Aufspannfläche 36 bearbeitet werden. Deshalb werden in der Regel die nicht dargestellten Zentrierelemente mit großer Genauigkeit rechtwinklig zur Aufspannfläche 36 des Formwerkzeuges 3 liegen, während die Teilebenen 37 der Formhälften des Formwerkzeuges 3 (Figur 1,2,3) mit mehr oder weniger großen Abweichungen zur Aufspannfläche 36 behaftet sind. Das ist der Grund dafür, daß beim Spritzgießbetrieb trotz vorheriger Einstellung Parallelitätsabweichungen zwischen den Hälften des Formwerkzeuges 3 vorhanden sind, die durch entsprechende Verlagerung der beweglichen Werkzeugaufspannplatte 5 überwunden werden müssen. Beim Schließvorgang des Formwerkzeuges 3 berühren sich theoretisch beide Hälften des Formwerkzeuges nur an einem Punkt 8, während in Vertikal- und Horizontalrichtung zwischen den Teilebenen 37 ein Keilspalt vorhanden ist. Unter dem Überangebot an Schließkraft wird nun die Formhälfte an der beweglichen Werkzeugaufspannplatte 5 bis zur satten Anlage an die Formhälfte an der festen Werkzeugaufspannplatte 2 gegen den Widerstand der als Biegedruckstäbe ausgebildeten Stützen 10 und unter Verschiebung des konstruktiven Drehpunktes 8 um einen Betrag Δ ₓ herangezogen. Die Stützen 10 (Biegedruckstäbe) sind dabei so bemessen, daß sie die Kräfte, die auf die Seitenführungsrollen 14 des Gleitschlittens wirken auf ca. 1/30 der maximalen Schließkräfte begrenzen. Diese begrenzende Wirkung der Stützen 10 kommt in dem Anteilsfaktor C (Federsteife der Federn 7 und 9 in Figur 3) für die anteilige Schließkraft C . 2 . Fs zum Ausdruck. Zur Überwindung des Spaltes zwischen den Hälften des Formwerkzeuges 3 in der vertikalen Ebene wirkt die Vertikalelastizität des Gleitschlittens 4 in seinem vorderen oder hinteren Abschnitt in Kombination mit der Druckelastizität der Stützen 10 (Biegedruckstäbe). Dadurch werden Querverschiebungen in der Vertikalrichtung, zwischen den Hälften des Formwerkzeuges 3 weitestgehend vermieden. Beim Werkzeugöffnungsvorgang stellen die Stützen, in Folge der in ihnen gespeicherten Rückverformungsenergie, die bewegliche Werkzeugaufspannplatte 5 wieder in die bei der Endmontage vorgenommene Optimalstellung zurück. Dabei wird eine Drehung um den konstruktiven Drehpunkt 6 und eine Rückverschiebung des Drehzapfens, der als querverschiebbare Kulisse 11 in der Nut 11.1 (Figur 3 und 7) verschiebbar ist, um den Betrag Δ _{X} vollzogen. Damit ist gewährleistet, daß beim nächsten Schließvorgang die Formhälfte des Formwerkzeuges 3 an der beweglichen Werkzeugaufspannplatte 5 wieder optimal mit der anderen Formhälfte in Eingriff kommt. In gleicher Weise erfolgt durch die Vertikalelastizität des Gleitschlittens 4 und die Druckelastizität der Stützen 10 beim Werkzeugöffnungsvorgang die selbsttätige Rückstellung der beweglichen Werkzeugaufspannplatte 5 in die optimale Neigungslage.

Beim kritischen Aufreißvorgang, der sich in der Regel durch die Spezifik des Formwerkzeuges 3 asymmetrisch vollzieht, wird das Formwerkzeug 3 unter der Wirkung der Aufreißkräfte schief aufgezogen. Die Steifigkeit der Stützen 10 ist dabei so bemessen, daß das Schiefziehen vor Erreichen der Verträglichkeitsgrenze des Formwerkzeuges begrenzt wird. Das bedeutet, bevor alle möglichen Passungsspiele zwischen den Hälften des Formwerkzeuges 3 aufgebraucht sind, herrscht Kräftegleichgewicht zwischen den Biegekräften an den Stützen 10 und den einseitig wirkenden Aufreißkräften.

Auch gegenüber dieser schiefgezogenen Stellung der beweglichen Werkzeugaufspannplatte 5 erfolgt bei der sich anschließenden Werkzeugöffnungsbewegung die selbsttätige Rückstellung der beweglichen Werkzeugaufspannplatte in die optimale Horizontal- und Vertikallage. Erreicht wird das wiederum durch die Vertikalelastizität des Gleitschlittens und die Biege- und Druckelastizität der Stützen 10. Auf diese Weise besitzt die erfindungsgemäß auf dem Gleitschlitten 4 angeordnete bewegliche Werkzeugaufspannplatte 5, im Vergleich zu den bekannten Lösungen alle erforderlichen Freiheitsgrade, durch die ein optimaler Schließvorgang gewährleistet ist, durch die das schiefe Aufreißen begrenzt wird, durch die der Gleitschlitten bei allen Verlagerungen der beweglichen Werkzeugaufspannplatte hinsichtlich seiner Seitenführung im Maschinengestell 1 unbeteiligt bleibt und durch die bei jedem Werkzeugöffnungsvorgang ohne Hysteresis eine selbsttätige Rückstellung erfolgt.

## Patentansprüche

1. Formschließeinrichtung für Spritzgießmaschinen mit einer festen Werkzeugaufspannplatte (2) und einer auf einem Gleitschlitten (4) mit zwei Gleitschuhen (4.1) und einem biegesteifen Verbindungsteil (4.2) beweglichen Werkzeugaufspannplatte (5), wobei die feste Werkzeugaufspannplatte (2) und der Gleitschlitten (4) mit der beweglichen Werkzeugaufspannplatte (5) auf einem Maschinengestell (1) abgestützt sind, die beiden Werkzeugaufspannplatten (2, 5) je eine Formhälfte eines Formwerkzeuges (3) aufnehmen und über freitragende oder durchgehende Säulen (5.1) miteinander verbindbar oder verbunden sind, wobei die Säulen in Abhängigkeit von der Werkzeugeinbauhöhe (H_{w}) durch eine Werkzeughöhenverstellvorrichtung (5.2) einstellbar sind, zum Zusammen- oder Auseinanderfahren der Formhälften des Formwerkzeuges (3) die bewegliche Werkzeugaufspannplatte (5) mit Hilfe von einem oder mehreren Eilgangzylindern (2.2) in die Öffnungs- oder Schließstellung gefahren wird und durch Schließzylinder (2.3) die Schließ- und Zuhaltekraft und die Aufreißkraft aufgebracht wird, dadurch gekennzeichnet, daß seitlich am Gleitschlitten (4) Seitenführungsrollen (14) angeordnet sind, die über drehbare Exzenterbolzen (12) einstellbar und am Maschinengestell (1) abstützbar sind, zwischen der beweglichen Werkzeugaufspannplatte (5) und dem Gleitschlitten (4) ein Luftspalt (5.3) vorhanden ist, der Gleitschlitten (4) mit der beweglichen Werkzeugaufspannplatte (5) über mindestens drei Stützen (10), die als Biegedruckstäbe ausgebildet sind und über einen zur Maschinenlängsachse (21) quer verschiebbaren vertikalen Drehzapfen (6) beweglich zueinander verbunden sind und die bewegliche Werkzeugaufspannplatte (5) und der Gleitschlitten (4) durch Befestigungsschrauben (18), die im Bereich der Randzonen der Maschinenlängsachse (21) und in der Nähe der Vorderkante (19) und der Hinterkante (20) der beweglichen Werkzeugaufspannplatte (5) angeordnet sind, gemeinsam befestigt sind.

2. Formschließeinrichtung für Spritzgießmaschinen nach Anspruch 1, dadurch gekennzeichnet, daß die Stützen (10) einen unteren Einspannschaft (34) und einen oberen Einspannschaft (33) besitzen, die in Aufnahmebohrungen (15) des Gleitschlittens (4) und in Bohrungen (5.5) in der beweglichen Werkzeugaufspannplatte (5) aufgenommen werden, zwischen beiden Einspannschäften die Stütze (10) verjüngt ist, an der unteren Stirnseite der Stütze (10) unter dem Winkel (α_{K}) eine Keilschräge angearbeitet ist, die mit einem keilförmigen Verstellelement (17) in Wirkverbindung steht.

3. Formschließeinrichtung nach Anspruch 2, dadurch gekennzeichnet, daß die Verstellelemente (17) von zwei Stützen (10) über eine Verstellspindel (24) verbunden sind und durch eine Drehbewegung der Verstellspindel (24), die bewegliche Werkzeugauspannplatte (5) zum Gleitschlitten (4) und zur festen Werkzeugaufspannplatte (2) einstellbar ist.

4. Formschließeinrichtung nach Anspruch 2 und 3, dadurch gekennzeichnet, daß im verjüngten Bereich der Stütze (10) die Aufnahmebohrung (15) stufenförmig erweitert ist.

5. Formschließeinrichtung nach Anspruch 1 bis 4, dadurch gekennzeichnet, daß je 2 Seitenführungsrollen (14) in einer Pendeltraverse (13) angeordnet sind, die von den Exzenterbolzen (12) aufgenommen werden und an den Eckpunkten des Gleitschlittens (4) angeordnet sind.

6. Formschließeinrichtung nach Anspruch 1 bis 5, dadurch gekennzeichnet, daß zwischen der beweglichen Werkzeugaufspannplatte (5) und dem Gleitschlitten (4) vorzugsweise vier Stützen (10) angeordnet sind.

## Claims

1. A mould closing arrangement for injection moulding machines comprising a fixed tool mounting plate (2) and a tool mounting plate (5) which is movable on a sliding carriage (4) with two sliding shoes (4.1) and a flexurally stiff connecting portion (4.2), wherein the fixed tool mounting plate (2) and the sliding carriage (4) with the movable tool mounting plate (5) are supported on a machine frame structure (1), the two tool mounting plates (2, 5) each carry a respective half of a moulding tool (3) and are or can be connected together by way of cantilever or continuous columns (5.1), wherein the columns are adjustable in dependence on the tool installation height (H_{w}) by a tool height adjusting device (5.2), for moving the mould halves of the moulding tool (3) together or away from each other the movable tool mounting plate (5) is moved by means of one or more fast-motion cylinders (2.2) into the opening or closing position and the closing and holding force and the parting force are applied by closing cylinders (2.3), characterised in that arranged laterally on the sliding carriage (4) are lateral guide rollers (14) which are adjustable by way of rotatable eccentric pins (12) and which can be supported on the machine frame structure (1), an air gap (5.3) is provided between the movable tool mounting plate (5) and the sliding carriage (4), the sliding carriage (4) is connected to the movable tool mounting plate (5) movably relative to each other by way of at least three supports (10) which are in the form of flexural pressure bars and by way of a vertical rotary pin (6) which is transversely displaceable relative to the longitudinal axis (21) of the machine and the movable tool mounting plate (5) and the sliding carriage (4) are jointly fixed by fixing screws (18) which are arranged in the region of the edge zones of the longitudinal axis (21) of the machine and in the vicinity of the front edge (19) and the rear edge (20) of the movable tool mounting plate (5).

2. A mould closing arrangement for injection moulding machines according to claim 1 characterised in that the supports (10) have a lower clamping shank (34) and an upper clamping shank (33) which are received in receiving bores (15) in the sliding carriage (4) and in bores (5.5) in the movable tool mounting plate (5), the support (10) is reduced between the two clamping shanks, and machined at the lower end face of the support (10) at the angle (α_{K}) is an inclined taper which is operatively associated with a tapered adjusting element (17).

3. A mould closing arrangement according to claim 2 characterised in that the adjusting elements (17) of two supports (10) are connected by way of an adjusting spindle (24) and the movable tool mounting plate (5) is adjustable relative to the sliding carriage (4) and relative to the fixed tool mounting plate (2) by a rotary movement of the adjusting spindle (24).

4. A mould closing arrangement according to claim 2 and claim 3 characterised in that in the reduced region of the support (10) the receiving bore (15) is enlarged in a stepped configuration.

5. A mould closing arrangement according to claims 1 to 4 characterized in that each two lateral guide rollers (14) are arranged in respective transverse swing members (13) which are carried by the eccentric pins (12) and which are arranged at the corner points of the sliding carriage (4).

6. A mould closing arrangement according to claims 1 to 5 characterised in that preferably four supports (10) are arranged between the movable tool mounting plate (5) and the sliding carriage (4).

## Revendications

1. Installation de fermeture de moule pour des machines d'injection, comportant une plaque d'ouverture porte-outil (2), fixe, et une plaque d'ouverture porte-outil (5), mobile, sur un chariot coulissant (4) à deux patins de coulissement (4.1) et une pièce de liaison (4.2) rigide en flexion, la plaque porte-outil (2) fixe et le patin (4) avec la plaque porte-outil mobile (5) s'appuyant sur un bâti (1) de la machine, les deux plaques porte-outil (2, 5) recevant chacune une moitié d'un outil de moulage (3) en pouvant ou en étant reliées par des colonnes en porte à faux ou traversantes (5.1), les colonnes se réglant en fonction de la hauteur propre de l'outil (H_{w}) par un dispositif de réglage de hauteur de l'outil (5.2), pour réunir ou écarter les moitiés de moule de l'outil de moulage (3), la plaque porte-outil (5) mobile étant conduite en position d'ouverture ou de fermeture par un ou plusieurs vérins à marche rapide (2.2) et la force de fermeture ou de maintien de fermeture et la force d'ouverture étant appliquées par des vérins de fermeture (2.3), installation caractérisée en ce que latéralement sur le patin (4) se trouvent des galets de guidage latéral (14) réglables par des goujons à excentrique (12), rotatifs, et s'appuyant sur le bâti de la machine (1), et entre la plaque porte-outil (5) mobile et le patin (4) il y a un intervalle d'air (5.3), le patin (4) étant relié à la plaque porte-outil (5) mobile par au moins trois appuis (10) réalisés sous la forme de barres de pression en flexion reliées de manière mobile par des tourillons (6), verticaux, coulissant transversalement par rapport à l'axe longitudinal (21) de la machine et la plaque porte-outil (5) mobile et le patin (4) sont solidarisés par des vis de fixation (18) prévues au niveau des zones marginales de l'axe longitudinal (21) de la machine et à proximité de l'arête avant (19) et de l'arête arrière (20) de la plaque porte-outil (5) mobile.

2. Installation de fermeture de moule pour des machines d'injection selon la revendication 1, caractérisée en ce que les appuis (10) possèdent une tige de serrage (34) inférieure et une tige de serrage (33) supérieure logées dans des perçages de réception (15) du patin (4) et dans des perçages (5.5) de la plaque porte-outil (5), mobile, et entre les deux tiges de serrage, l'appui (10) est diminué, et au niveau de la face frontale inférieure de l'appui (10), suivant un angle (α_{K}), est usinée une surface en forme de coin qui coopère avec un élément de réglage (17) en forme de coin.

3. Installation de fermeture de moule selon la revendication 2, caractérisée en ce que les éléments de réglage (17) sont reliés par deux appuis (10) par l'intermédiaire d'une broche de réglage (24) et le mouvement de rotation de la broche de réglage (24) règle la plaque porte-outil mobile (5) par rapport au patin (4) et par rapport à la plaque porte-outil fixe (2).

4. Installation de fermeture de moule selon les revendications 2 et 3, caractérisée en ce que dans la zone réduite des appuis (10), le perçage de réception (15) est augmenté de manière étagée.

5. Installation de fermeture de moule selon les revendications 1 à 4, caractérisée en ce que, dans une traverse pendulaire (13), est disposé chaque fois deux galets de guidage latéral (14) reçus par des goujons excentrés (12) et montés au coin du patin (4).

6. Installation de fermeture de moule selon les revendications 1 à 5, caractérisée en ce qu'entre la plaque porte-outil mobile (5) et le patin (4), on trouve de préférence quatre appuis (10).
